# EUROPÄISCHE PATENTANMELDUNG

(11) **EP 3 156 637 A1**
(43) Veröffentlichungstag der Anmeldung: **19.04.2017**
(21) Anmeldenummer: 16002193.7
(22) Anmeldetag: 12.10.2016
(51) Int. Cl.: F02M 25/12, F02B 43/10, F02B 43/12, F02M 27/02, F02D 19/06, C01B 13/02, C01B 3/04, C01B 3/06, C01B 3/08, F01N 5/02, F02G 5/02, F28D 7/10, F28F 13/06

(54) **VERFAHREN ZUM BETREIBEN EINES ANTRIEBSAGGREGATES UND ANTRIEBSAGGREGAT**

(30) Priorität: 16.10.2015 CH 15042015
(71) Anmelder: LaRoSe UG, 53721 Siegburg (DE)
(72) Erfinder: Rottländer, Heribert, 51491 Overath (DE)
(74) Vertreter: Hauck Patentanwaltspartnerschaft mbB

(57) **Zusammenfassung**

Es werden ein Verfahren zum Betreiben eines Antriebsaggregates und ein Antriebsaggregat beschrieben. Bei dem Verfahren wird Wasserdampf erzeugt, der bei erhöhter Temperatur in Anwesenheit mindestens eines Katalysators thermolytisch zu Wasserstoff und Sauerstoff zersetzt wird. Das erzeugte Gasgemisch wird in einen Brennraum des Antriebsaggregates eingeführt und dort zur Initiierung einer Knallgasreaktion gezündet. Das entsprechende Antriebsaggregat weist einen im Wesentlichen herkömmlich ausgebildeten Motor (1) oder eine Turbine auf, ferner einen Wasserdampferzeuger (13) und einen Wärmetauscher (4) zur Erhöhung der Temperatur des erzeugten Wasserdampfes. In einem Brennraum des Antriebsaggregates findet eine Knallgasreaktion statt, die ein entsprechendes Antriebselement antreibt.

## Beschreibung

Die vorliegende Erfindung betrifft ein Verfahren zum Betreiben eines Antriebsaggregates.

Da es sich bei den heute zum Betreiben von Antriebsaggregaten verwendeten fossilen Brennstoffen um nichterneuerbare Energiequellen handelt, wird weltweit nach Alternativen geforscht. Zielsetzung ist dabei, den Verbrauch von derartigen Brennstoffen zu reduzieren oder durch andere Energiequellen zu ersetzen. Ferner stellt die Verbrennung fossiler Brennstoffe infolge der anfallenden und nur teilweise beherrschbaren Emissionen sowie Erschöpfung der Vorkommen ein erhebliches globales Problem dar. Eine weitere Zielsetzung besteht daher darin, die Emissionen von derartigen Energiequellen zu verringern.

Der vorliegenden Erfindung liegt die Aufgabe zugrunde, ein Verfahren zum Betreiben eines Antriebsaggregates zur Verfügung zu stellen, das sich durch einen besonders geringen Verbrauch an fossilen Kraftstoffen sowie besonders niedrige Abgasemissionen auszeichnet.

Diese Aufgabe wird durch ein Verfahren zum Betreiben eines Antriebsaggregates gelöst, das die folgenden Schritte aufweist:
Erzeugen von Wasserdampf;
thermolytische Zersetzung des Wasserdampfes bei erhöhter Temperatur in Anwesenheit mindestens eines Katalysators zu Wasserstoff und Sauerstoff;
Einführen eines Gemisches aus dem erzeugten Wasserstoff und Sauerstoff sowie restlichem Wasserdampf in einen Brennraum des Antriebsaggregates;
Einführen eines durch Selbst- oder Fremdzündung zündfähigen Kraftstoffes auf Kohlenwasserstoffbasis in den Brennraum als Zündmedium;
Zünden des Gemisches zum Initiieren einer Knallgasreaktion und Antreiben eines Antriebselementes des Antriebsaggregates durch die erfolgte Gasexpansion; und
Abführen des nach der Reaktion erhaltenen Gemisches aus Wasser und Abgases des Zündmediums aus dem Brennraum.

Das erfindungsgemäße Verfahren umfasst zwei Hauptschritte:

In einem ersten Schritt erfolgt eine thermolytische (elektrolytische) Zersetzung von Wasserdampf zum Erhalt von Wasserstoff und Sauerstoff. Bei der entsprechenden Umsetzung verbleibt ein nichtreagierter Restanteil des Wasserdampfes, der wie eine Zündbarriere in dem entstandenen Gasgemisch wirkt und eine Reaktion beider Gasanteile miteinander verhindert.

In einem zweiten Verfahrensschritt wird das erhaltene Gemisch aus Wasserstoff, Sauerstoff und restlichem Wasserdampf in einen Brennraum des Antriebsaggregates zusammen mit einem zündfähigen Kraftstoff auf Kohlenwasserstoffbasis eingeführt und gezündet, wobei der zündfähige Kraftstoff als Zündmedium dient. Es erfolgt eine Knallgasreaktion mit entsprechender Gasexpansion, wodurch ein Antriebselement des Antriebsaggregates angetrieben wird. Schließlich wird das nach der Reaktion erhaltene Gemisch aus Wasser und Abgasen des Zündmediums aus dem Brennraum abgeführt.

Bei dem erfindungsgemäßen Verfahren wird der Kraftstoff auf Kohlenwasserstoffbasis lediglich als Zündmedium verwendet. Der Verbrauch dieses Basiskraftstoffes ist daher äußerst gering und mit dem Leerlaufverbrauch eines herkömmlichen Kraftfahrzeuges vergleichbar.

Zur Durchführung der thermolytischen (elektrolytischen) Zersetzung des Wasserdampfes muss die Temperatur desselben erhöht werden, und die Reaktion muss in Gegenwart von mindestens einem Katalysator stattfinden. Bei diesen Bedingungen werden Wassermoleküle instabil und zerfallen in ihre Bestandteile Wasserstoff und Sauerstoff. Als geeignete Katalysatoren kommen Eisen, Chrom, Feuerstein, Aluminium, Molybdän, Antimon, Wismut, Kupfer, Cadmium, Neodym, Nickel oder Wolfram zur Anwendung, die in geeigneter Weise zu konfigurieren sind. Wie bereits erwähnt, dient der zugeführte Kraftstoff auf Kohlenwasserstoffbasis lediglich zur Zündung des Wasserstoff-Sauerstoff(Luft)-Wasserdampf-Gemisches.

Bei dem erfindungsgemäßen Verfahren werden der erzeugte Wasserstoff und Sauerstoff sowie der restliche Wasserdampf vorzugsweise ohne Zwischenlagerung direkt in den Brennraum des Antriebsaggregates eingeführt. Hierdurch wird sichergestellt, dass das erhalten Gasgemisch sofort in der gewünschten Weise reagieren kann, ohne dass durch Speicherung/Lagerung bedingte unerwünschte Zwischenreaktionen stattfinden können.

Die Temperatur des Wasserdampfes wird für die thermolytische Zersetzung vorzugsweise auf ≥ 800 °C erhöht. Bei einer derartigen Temperatur wird ein sicherer Ablauf der gewünschten Knallgasreaktion erreicht. Obwohl an sich bereits beim Erhitzen auf ca. 600 °C des Gasgemisches eine Knallgasreaktion stattfindet, wird der obige Temperaturbereich bevorzugt, um einen beständigen Reaktionsverlauf zu garantieren.

Zur Reaktion kommen bei dem erfindungsgemäßen Verfahren Wasserstoff-Sauerstoff- bzw. Wasserstoff-Luft-Gemische, die in jedem Fall mehr als 4 Vol.-% und weniger als 75,6 Vol.-% Wasserstoff enthalten. Mit derartigen Gemischen lässt sich die gewünschte Knallgasreaktion durchführen, wobei vorzugsweise ein Wasserstoff-Sauerstoff-Gemisch von etwa 2:1 zur Anwendung gelangt.

Wie bereits ausgeführt, muss die Temperatur des erzeugten Wasserdampfes auf mindestens 600 °C, vorzugsweise auf mindestens 800 °C, erhöht werden, um die thermolytische Zersetzung durchführen zu können. Vorzugsweise wird die für die thermolytische Reaktion benötigte erhöhte Temperatur dabei durch das Abgas des Antriebsaggregates erzeugt. Das Abgas wird im Wärmeaustausch mit dem erzeugten Wasserdampf in Kontakt gebracht, um die entsprechende Temperaturerhöhung des Wasserdampfes zu bewirken. Dabei wird erfindungsgemäß das Abgas zur Erzeugung der erhöhten Temperatur vorzugsweise in schnelle Rotation versetzt. Durch die erreichte hohe Rotationsgeschwindigkeit verbleibt das Abgas wesentlich länger im Kontaktbereich mit dem Wasserdampf als beim einfachen Durchströmen eines Rohres, so dass sich hierdurch die entsprechende Temperaturerhöhung erzielen lässt. Darüber hinaus ist hierfür der erreichte Wirbelstromeffekt ursächlich.

Der für das erfindungsgemäße Verfahren benötigte Wasserdampf wird vorzugsweise in einem Verdampfer, insbesondere elektrischen Verdampfer, erzeugt. Bei einer anderen Variante werden die heißen Abgase des Antriebsaggregates zur Dampferzeugung eingesetzt.

Das erfindungsgemäße Verfahren eignet sich besonders zum Betreiben des Antriebsaggregates eines Kraftfahrzeuges, da sämtliche Verfahrensschritte, wie Dampferzeugung, thermolytische Reaktion, Knallgasreaktion, im Kraftfahrzeug selbst durchgeführt werden können. Speziell kann mit dem erfindungsgemäßen Verfahren ein Verbrennungsmotor (Benzinmotor oder Dieselmotor) betrieben werden.

Auch kann das Verfahren für andere Antriebsaggregate eingesetzt werden, beispielsweise zum Betreiben einer Gasturbine.

Bei dem erfindungsgemäßen Verfahren kann der zur Durchführung der Knallgasreaktion benötigte zündfähige Kraftstoff auf Kohlenwasserstoffbasis benutzt werden, um das Antriebsaggregat zu Beginn seines Betriebes auf herkömmliche Weise durch Verbrennung dieses Kraftstoffes anzutreiben. Beispielsweise wird hierbei das Antriebsaggregat so lange auf herkömmliche Weise betrieben, bis Abgas mit einer entsprechend hohen Temperatur zur Verfügung steht, das dann beispielsweise zur Dampferzeugung und/oder Erhöhung der Temperatur des erzeugten Wasserdampfes für die thermolytische Zersetzung desselben verwendet werden kann. Dies schließt natürlich nicht aus, dass das erfindungsgemäße Verfahren ausschließlich so betrieben wird, dass der zündfähige Kraftstoff auf Kohlenwasserstoffbasis ausschließlich als Zündmedium bei der Knallgasreaktion eingesetzt wird, während andere Wärmequellen zur Dampferzeugung und/oder Temperaturerhöhung des Wasserdampfes für die thermolytische Zersetzung verwendet werden, beispielsweise elektrische Heizeinrichtungen.

Die vorliegende Erfindung betrifft ferner ein Antriebsaggregat mit einem Brennraum, einer Einrichtung zur Einführung eines zündfähigen Kraftstoffes auf Kohlenwasserstoffbasis und von Luft oder eines entsprechenden Kraftstoff/Luft-Gemisches in den Brennraum und einer Einrichtung zur Abführung der durch Verbrennung gebildeten Abgase.

Das erfindungsgemäß ausgebildete Antriebsaggregat ist dadurch gekennzeichnet, dass es ferner die folgenden Bestandteile umfasst:
eine Einrichtung zur Wasserdampferzeugung;
eine Einrichtung zur thermomlytischen Zersetzung des erzeugten Wasserdampfes bei erhöhter Temperatur in Anwesenheit mindestens eines Katalysators zu Wasserstoff und Sauerstoff;
eine Einrichtung zur Einführung eines Gemisches aus dem erzeugten Wasserstoff und Sauerstoff sowie restlichem Wasserdampf in den Brennraum des Antriebsaggregates; und
eine Einrichtung zur Abführung des nach der Verbrennung des Kraftstoff-Gas-Gemisches erhaltenen Gemisches aus Wasser und Abgasen des verbrannten Kraftstoffes aus dem Brennraum.

Das erfindungsgemäß ausgebildete Antriebsaggregat funktioniert derart, dass der mit der Einrichtung zur Wasserdampferzeugung erzeugte Wasserdampf, dessen Dampfdruck vorzugsweise mindestens 3 bar, insbesondere 3,8 bis 4 bar, betragen sollte, der Einrichtung zur thermolytischen Zersetzung (Elektrolyse) zugeführt und in dieser Einrichtung bei erhöhter Temperatur in Anwesenheit mindestens eines Katalysators zu Wasserstoff und Sauerstoff zersetzt wird. In der Einrichtung zur thermolytischen Zersetzung wird der Wasserdampf vorzugsweise auf eine Temperatur von ≥ 800 °C erhitzt, wodurch in Gegenwart des entsprechenden mindestens einen Katalysators die gewünschte Zersetzung stattfindet. Das entstandene Gasgemisch aus Wasserstoff und Sauerstoff, das auch einen Anteil an nichtzersetztem Wasserdampf enthält, der eine Reaktionsbarriere bildet, wird dann der in den Brennraum des Antriebsaggregates eingeführten Luft beigemischt und zusammen mit dieser in den Brennraum eingeführt oder direkt in den Brennraum eingeführt. Der ferner in den Brennraum eingeführte zündfähige Kraftstoff oder ein entsprechendes Kraftstoff/Luft-Gemisch bewirkt dann durch Selbstzündung oder Fremdzündung eine Knallgasreaktion, wodurch ein Antriebselement des Antriebsaggregates angetrieben wird. Das nach der Verbrennung des Kraftstoff-Gas-Gemisches erhaltene Gemisch aus Wasser und Abgasen des verbrannten Kraftstoffes wird dann über eine entsprechende Einrichtung aus dem Brennraum abgeführt.

Vorzugsweise weist die Einrichtung zur Wasserdampferzeugung einen Verdampfer, insbesondere einen elektrischen Verdampfer, auf.

Die Einrichtung zur thermolytischen Zersetzung (Elektrolyse) umfasst vorzugsweise einen Wärmetauscher, der bei einer besonders bevorzugten Ausführungsform der Erfindung zur indirekten Kontaktierung des Wasserdampfes mit dem Abgas des Antriebsaggregates ausgebildet ist. Es erfolgt daher bei dieser Ausführungsform eine Erhitzung des gebildeten Wasserdampfes im Wärmetauscher vorzugsweise auf die erwähnten ≥ 800 °C, bei welcher Temperatur eine thermolytische bzw. elektrolytische katalytische Zersetzung des Wasserdampfes stattfindet.

Konstruktiv weist der Wärmetauscher vorzugsweise ein Doppelmantelrohr auf, dessen Innenraum vom Wasserdampf und dessen Außenraum vom Abgas durchströmt wird. Es hat sich dabei gezeigt, dass die besten Ergebnisse in Bezug auf die gewünschte Temperaturerhöhung bei einer Ausführungsform erreicht werden, bei der der Wärmetauscher Einrichtungen zum Aufprägen einer rotatorischen Bewegung für den Wasserdampf und/oder das Abgas umfasst. Hierdurch wird die Verweildauer beider Medien im Wärmetauscher verlängert, ferner ein besonders inniger Kontakt zwischen Wasserdampf und Abgas über den Innenmantels des Doppelmantelrohres erreicht.

Bei diesen Einrichtungen zum Aufprägen einer rotatorischen Bewegung kann es sich um tangential in das Doppelmantelrohr mündende Rohranschlüsse für die Abgas- bzw. Wasserdampfzuführung handeln.

Auch weist der Wärmetauscher vorzugsweise Einrichtungen zur tangentialen Abführung des gebildeten Gasgemisches und/oder des Abgases auf, die die rotatorische Bewegung des Wasserdampfes und Abgases im Doppelmantelrohr weiter fördern. Hierbei umfassen die entsprechenden Abführeinrichtungen vorzugsweise einen konusförmigen Umlenkkörper, der mit seiner Spitze in das Doppelmantelrohr hineinragt und für eine radiale Auswärtsbewegung des Dampf- bzw. Abgasstromes sorgt, um diesen einem Auslassrohr zuzuführen.

Im erfindungsgemäß vorgesehenen Wärmetauscher wird daher aus dem Wasserdampf das gewünschte Wasserstoff-Sauerstoff-Wasserdampf-Gemisch erzeugt. Hierzu dient mindestens ein Katalysator, der vorzugsweise zentral im Doppelmantelrohr des Wärmetauschers angeordnet ist.

Dieses Doppelmantelrohr ist vorzugsweise im Normalzustand des Antriebsaggregates vertikal angeordnet, wobei die Wasserdampfzufuhr und Abgaszufuhr vorzugsweise am oberen Ende und die Abführung beider Medien vorzugsweise am unteren Ende stattfinden. Der Wärmetauscher wird daher vorzugsweise von beiden Medien in Vertikalrichtung rotatorisch durchströmt. Eine Einführung des Wasserdampfes von unten ist ebenfalls möglich.

Der mit dem Wasserdampferzeuger erzeugte Wasserdampf hat vorzugsweise beim Eintritt in den Wärmetauscher eine Temperatur von etwa 120 °C. Im Wärmetauscher findet eine Temperaturerhöhung auf vorzugsweise 800-900 °C statt, durch die die entsprechende thermolytisch-katalytische Reaktion initiiert wird.

Bei dem erfindungsgemäß ausgebildeten Aggregat kann es sich um ein herkömmliches Antriebsaggregat handeln, beispielsweise einen Verbrennungsmotor, wie Dieselmotor, Benzinmotor, aber auch um eine Turbine. Jedem Brennraum des Antriebsaggregates, beispielsweise jedem Zylinder eines Verbrennungsmotors, kann dabei ein Wärmetauscher zugeordnet sein, der das für die Knallgasreaktion benötigte Gasgemisch erzeugt. Das Antriebsaggregat wird dabei zu Betriebsbeginn auf herkömmliche Weise durch Verbrennung eines entsprechenden Kraftstoffes betrieben, bis die gewünschte Temperatur des erzeugten Abgases erreicht ist, welche die benötigte Temperaturerhöhung des erzeugten Wasserdampfes generieren kann. Danach wird der herkömmliche Kraftstoff lediglich noch zum Initiieren der Knallgasreaktion benötigt, so dass der Kraftstoffverbrauch wesentlich reduziert wird und beispielsweise dem Leerlaufverbrauch eines herkömmlichen Antriebsaggregates entspricht.

Die Erfindung wird nachfolgend anhand eines Ausführungsbeispieles in Verbindung mit der Zeichnung im Einzelnen erläutert. Es zeigen:
- Figur 1: ein schematische Blockschaubild eines Antriebsaggregates;
- Figur 2: einen Längsschnitt durch einen Wärmetauscher, der bei dem Antriebsaggregat Verwendung findet; und
- Figur 3: eine Draufsicht auf den Wärmetauscher der Figur 2.

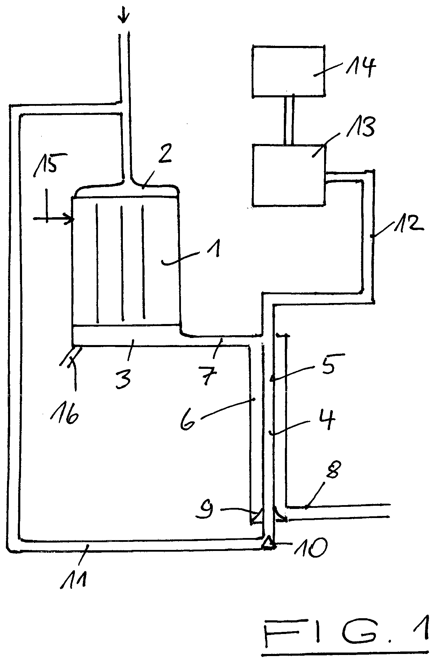

In der schematischen Darstellung der Figur 1 ist ein Antriebsaggregat gezeigt, das einen im Wesentlichen herkömmlichen Verbrennungsmotor 1 aufweist, welcher als Dieselmotor mit vier Zylindern ausgebildet ist. Der Motor weist eine Einrichtung 2 zur Einführung von Verbrennungsluft in die jeweiligen Zylinder auf, wobei es sich hierbei beispielsweise um über einen Turbolader komprimierte Verbrennungsluft handeln kann. Ferner besitzt der Motor eine Kraftstoffeinführeinrichtung 15, die beispielsweise in Form von Einspritzventilen zum Einspritzen von Dieselkraftstoff ausgebildet sein kann. Die vom Motor erzeugten Abgase werden über eine Abgasabführeinrichtung 3 in Form eines Abgaskrümmers abgeführt. Insoweit kann der hier beschriebene Motor von herkömmlicher Bauart sein.

Das Antriebsaggregat besitzt des Weiteren einen elektrischen Verdampfer 13, dem von einem Wasserspeicher 14 Wasser zugeführt wird, das im Verdampfer verdampft wird. Es entsteht dabei Wasserdampf, der beispielsweise eine Temperatur von etwa 120 °C und einen Dampfdruck von mindestens 3 bar besitzt.

Der im Verdampfer 13 erzeugte Wasserdampf wird über eine geeignete Leitung 12 einem Wärmetauscher 4 zugeführt. Der Wärmetauscher 4 ist in Form eines Doppelmantelrohres ausgebildet, das einen Innenraum 5 sowie einen diesen umgebenden Außenraum 6 besitzt. Über die Leitung 12 wird der erzeugte Wasserdampf tangential in das obere Ende des Innenraumes 5 eingeführt. Durch diese Art der Einführung wird eine rotatorische Bewegung des Dampfes erzeugt, der im Innenraum 5 des Rohres rotatorisch abwärts bewegt wird.

Das vom Verbrennungsmotor 1 erzeugte Abgas wird über ein sehr kurzes Rohr 7 ohne jede Biegung abgeführt und tangential in das obere Ende des Außenraumes 6 eingeführt. Durch diese Art der Einführung wird das Abgas mit einer rotatorischen Bewegung beaufschlagt, so dass dieses um den Innenraum 5 herum rotatorisch im Außenraum 6 nach unten geführt wird. Durch diesen Wirbelstromeffekt von beiden Medien wird ein inniger Kontakt mit langer Verweildauer erzielt, so dass der im Innenraum 5 abwärts geführte Dampf eine entsprechende Temperaturerhöhung erfährt.

Innerhalb des Innenraumes 5 des Wärmetauschers befindet sich mindestens ein Katalysator, der die thermolytische Zersetzung des erzeugten Wasserdampfes in Wasserstoff und Sauerstoff bei der erreichten erhöhten Temperatur initiiert.

Damit die rotatorische Abwärtsbewegung des Wasserdampfes und der Abgase in den Räumen 5 und 6 aufrechterhalten wird und durch die Abführung dieser Medien aus dem Wärmetauscher keine Abbremsung bewirkt wird, sind gegenüber den jeweiligen Abführungsleitungen 8 und 11 konusförmige Umlenkkörper 9, 10 in den entsprechenden Räumen 5, 6 angeordnet. Diese Umlenkkörper bewirken eine radiale Ablenkung des jeweiligen Dampf- bzw. Gasstromes zu einem tangential in den Außenraum 6 mündenden Abgasabführrohr 8 und einer tangential in den Innenraum 5 mündenden Gasabführleitung 11. Über die Gasabführleitung 11 wird das erhaltene Wasserstoff-Sauerstoff-Restdampf-Gemisch in den Luftkanal der Luftzuführeinrichtung 2 des Verbrennungsmotors 1 eingeführt. Die entsprechenden Zylinder werden daher mit einem Gemisch aus komprimierter Luft sowie Wasserstoff-Sauerstoff-Wasserdampf beaufschlagt. Durch die Zündung des eingespritzten Dieselkraftstoffes wird eine Knallgasreaktion des eingeführten Gemisches initiiert. Die damit verbundene Gasexpansion bewirkt eine entsprechende Kolbenbewegung.

Das durch die Knallgasreaktion erzeugte Wasser wird aufgefangen und über ein Leitungssystem 16 abgeführt und kann wieder dem Wasserspeicher 14 zur Gewinnung von neuem Wasserdampf zugeführt werden. Die durch die Verbrennung des Kraftstoffes erzeugten Abgase werden dem Wärmetauscher 4 zugeführt.

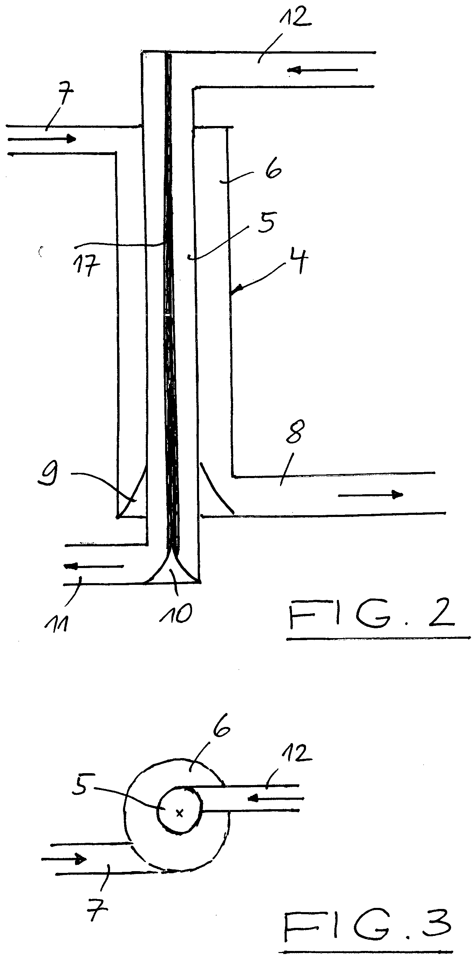

Figur 2 zeigt einen vergrößerten Längsschnitt durch den Wärmetauscher 4. Durch die tangentiale Einführung des Wasserdampfes über die Leitung 12 und des Abgases über die Leitung 7 sowie die tangentiale Abführung beider Medien, unterstützt durch die konusförmigen Umlenkkörper 9, 10, wird ein entsprechender Wirbelstromeffekt erzeugt.

Im Innenraum 5 des Wärmetauschers ist ferner zentral eine Stange 17 angeordnet, an der mindestens ein konfigurierter Katalysator fixiert ist, um die gewünschte thermolytische Reaktion zu initiieren. Geeignete Katalysatoren wurden bereits vorstehend genannt. Die Stange 17 erstreckt sich im Wesentlichen über die gesamte Höhe des Innenraumes 5.

Figur 3 zeigt eine Draufsicht auf den Wärmetauscher. Man erkennt die Wasserdampfzuführleitung 12, die tangential in den Innenraum 5 des Wärmetauschers mündet, sowie die Abgaszuführleitung 7, die tangential in den Außenraum 6 des Wärmetauschers mündet. Hierdurch wird beiden Medien eine rotarische Bewegung aufgeprägt.

## Patentansprüche

1. Verfahren zum Betreiben eines Antriebsaggregates mit den folgenden Schritten:
Erzeugen von Wasserdampf;
thermolytische Zersetzung des Wasserdampfes bei erhöhter Temperatur in Anwesenheit mindestens eines Katalysators zu Wasserstoff und Sauerstoff;
Einführen eines Gemisches aus dem erzeugten Wasserstoff und Sauerstoff sowie restlichem Wasserdampf in einen Brennraum des Antriebsaggregates;
Einführen eines durch Selbst- oder Fremdzündung zündfähigen Kraftstoffes auf Kohlenwasserstoffbasis in den Brennraum als Zündmedium;
Zünden des Gemisches zum Initiieren einer Knallgasreaktion und Antreiben eines Antriebselementes des Antriebsaggregates durch die erfolgte Gasexpansion; und
Abführen des nach der Reaktion erhaltenen Gemisches aus Wasser und Abgases des Zündmediums aus dem Brennraum.

2. Verfahren nach Anspruch 1, **dadurch gekennzeichnet, dass** der erzeugte Wasserstoff und Sauerstoff sowie der restliche Wasserdampf ohne Zwischenlagerung direkt in den Brennraum des Antriebsaggregates eingeführt werden.

3. Verfahren nach Anspruch 1 oder 2, **dadurch gekennzeichnet, dass** die Temperatur des Wasserdampfes zur thermolytischen Zersetzung auf ≥ 800 °C erhöht wird.

4. Verfahren nach einem der vorangehenden Ansprüche, **dadurch gekennzeichnet, dass** die für die thermolytische Reaktion benötigte erhöhte Temperatur durch das Abgas des Antriebsaggregates erzeugt wird.

5. Verfahren nach Anspruch 4, **dadurch gekennzeichnet, dass** das Abgas zur Erzeugung der erhöhten Temperatur in schnelle Rotation versetzt wird.

6. Verfahren nach einem der vorangehenden Ansprüche, **dadurch gekennzeichnet, dass** der Wasserdampf in einem Verdampfer erzeugt wird.

7. Verfahren nach einem der vorangehenden Ansprüche, **dadurch gekennzeichnet, dass** hiermit ein Verbrennungsmotor betrieben wird.

8. Verfahren nach einem der vorangehenden Ansprüche, **dadurch gekennzeichnet, dass** das Antriebsaggregat eines Kraftfahrzeuges betrieben wird.

9. Verfahren nach einem der Ansprüche 1 bis 6, **dadurch gekennzeichnet, dass** hiermit eine Gasturbine betrieben wird.

10. Antriebsaggregat mit einem Brennraum, einer Einrichtung zur Einführung eines zündfähigen Kraftstoffes auf Kohlenwasserstoffbasis und von Luft oder eines entsprechenden Kraftstoff/Luft-Gemisches in den Brennraum und einer Einrichtung zur Abführung der durch Verbrennung gebildeten Abgase, **dadurch gekennzeichnet, dass** es ferner die folgenden Bestandteile umfasst:
eine Einrichtung (14) zur Wasserdampferzeugung;
eine Einrichtung zur thermomlytischen Zersetzung des erzeugten Wasserdampfes bei erhöhter Temperatur in Anwesenheit mindestens eines Katalysators zu Wasserstoff und Sauerstoff;
eine Einrichtung zur Einführung eines Gemisches aus dem erzeugten Wasserstoff und Sauerstoff sowie restlichem Wasserdampf in den Brennraum des Antriebsaggregates; und
eine Einrichtung zur Abführung des nach der Verbrennung des Kraftstoff-Gas-Gemisches erhaltenen Gemisches aus Wasser und Abgasen des verbrannten Kraftstoffes aus dem Brennraum.

11. Antriebsaggregat nach Anspruch 10, **dadurch gekennzeichnet, dass** die Einrichtung zur Wasserdampferzeugung einen Verdampfer (13) aufweist.

12. Antriebsaggregat nach Anspruch 10 oder 11, **dadurch gekennzeichnet, dass** die Einrichtung zur thermolytischen Zersetzung einen Wärmetauscher (4) umfasst.

13. Antriebsaggregat nach Anspruch 12, **dadurch gekennzeichnet, dass** der Wärmetauscher (4) zur indirekten Kontaktierung des Wasserdampfes mit dem Abgas des Antriebsaggregates ausgebildet ist.

14. Antriebsaggregat nach Anspruch 12 oder 13, **dadurch gekennzeichnet, dass** der Wärmetauscher (4) ein Doppelmantelrohr aufweist, dessen Innenraum (5) vom Wasserdampf und dessen Außenraum (6) vom Abgas durchströmt wird.

15. Antriebsaggregat nach einem der Ansprüche 12 bis 14, **dadurch gekennzeichnet, dass** der Wärmetauscher (4) Einrichtungen zum Aufprägen einer rotatorischen Bewegung für den Wasserdampf und/oder das Abgas umfasst.

16. Antriebsaggregat nach Anspruch 15, **dadurch gekennzeichnet, dass** der Wärmetauscher (4) Einrichtungen zur tangentialen Abführung des gebildeten Gasgemisches und/oder des Abgases umfasst.

17. Antriebsaggregat nach Anspruch 16, **dadurch gekennzeichnet, dass** die Abführeinrichtungen einen konusförmigen Umlenkkörper (9, 10) umfassen.

18. Antriebsaggregat nach einem der Ansprüche 12 bis 17, **dadurch gekennzeichnet, dass** innerhalb des Wärmetauschers (4) mindestens ein Katalysator angeordnet ist.
